# EUROPÄISCHE PATENTSCHRIFT

(11) **EP 3 074 632 B1**
(45) Veröffentlichungstag und Bekanntmachung des Hinweises auf die Patenterteilung: **27.12.2017**
(21) Anmeldenummer: 14772072.6
(22) Anmeldetag: 23.09.2014
(51) Int. Cl.: F04D 29/08, F04D 29/62, F04D 13/06, F04D 29/60, F16H 57/04

(54) **ELEKTROMOTORISCH ANGETRIEBENE FLÜSSIGKEITSPUMPE, INSBESONDERE ZUR ZWANGSSCHMIERUNG EINES SCHALTGETRIEBES FÜR KRAFTFAHRZEUGE**
ELECTRIC MOTOR DRIVEN FLUID PUMP, IN PARTICULAR FOR THE FORCED LUBRICATION OF A MANUAL TRANSMISSION OF A MOTOR VEHICLE
POMPE À LIQUIDES ENTRAÎNÉE PAR UN MOTEUR ÉLECTRIQUE, EN PARTICULIER POUR LA LUBRIFICATION FORCÉE DE LA BOÎTE DE VITESSES DE VÉHICULES AUTOMOBILES

(30) Priorität: 29.11.2013 DE 102013017976
(43) Veröffentlichungstag der Anmeldung: 05.10.2016
(73) Patentinhaber: FTE automotive GmbH, 96106 Ebern (DE)
(72) Erfinder: REUL, Alexander, 96158 Frensdorf (DE); STÖSSEL, Roland, 97514 Oberaurach (DE)
(74) Vertreter: Oppermann, Mark
(86) Internationale Anmeldenummer: PCT/EP2014/002576
(87) Internationale Veröffentlichungsnummer: WO 2015/078541

(56) Entgegenhaltungen:
- EP-A1- 2 610 497
- EP-A2- 0 864 760

## Beschreibung

### TECHNISCHES GEBIET

Die vorliegende Erfindung bezieht sich auf eine elektromotorisch angetriebene Flüssigkeitspumpe. Insbesondere bezieht sich die Erfindung auf eine solche Flüssigkeitspumpe, wie sie in modernen Kraftfahrzeugen massenweise zur Zwangsschmierung von Schaltgetrieben zum Einsatz kommen.

Ein Schaltgetriebe, welches im Kraftfahrzeug in einem Antriebsstrang zwischen einer Verbrennungskraftmaschine und anzutreibenden Fahrzeugrädern angeordnet ist, weist zur Schmierung mit einem Schmiermittel, wie Getriebeöl, ein Schmiermittelsystem auf, welches dazu dient, das Schmiermittel aus einem Schmiermittelsumpf im Getriebegehäuse an zu schmierende Stellen zu bringen. Zu Letzteren zählen insbesondere in Eingriff stehende Zahnräder und Lager für die sich drehenden Teile, namentlich Wellen und Zahnräder.

Bei den herkömmlichen Schmiermittelsystemen in Schaltgetrieben unterscheidet man grundsätzlich zwischen einer Tauchschmierung, bei welcher die Zahnräder im Schmiermittelsumpf "planschen" und das Schmiermittel beim Weiterdrehen auf die Zahnräder und Lager verteilen, und einer Zwangsschmierung vermittels einer oder mehrerer Pumpen, die das Schmiermittel aus dem Schmiermittelsumpf über ein Leitungssystem an die zu schmierenden Stellen fördern. Wird ausschließlich zwangsgeschmiert, d.h. keines der Zahnräder taucht beabsichtigt in den Schmiermittelsumpf ein, spricht man von einer "Trockensumpfschmierung", die gegenüber einer Tauchschmierung oder einer kombinierten Schmierung den Vorteil besitzt, dass es durch die Zahnräder nicht zu einem Eintrag von Luft in das Schmiermittel und damit nicht zur Bildung von Ölschaum kommt, der zu Störungen bei der Getriebeschmierung führen kann. Darüber hinaus werden bei Schaltgetrieben mit Trockensumpfschmierung sogenannte "Planschverluste" vermieden, die den Getriebewirkungsgrad verschlechtern.

### STAND DER TECHNIK

Für das Schmiermittelsystem von Schaltgetrieben mit Trockensumpfschmierung kommen im Stand der Technik bereits elektromotorisch angetriebene Schmiermittelpumpen zum Einsatz (siehe z.B. die Druckschrift DE-A-10 2005 005 154). Zu unterscheiden sind hier Schmiermittelsysteme, bei denen das Schmiermittel mittels der Pumpe - in der Regel eine Zahnradpumpe - unter Druck an Düsen gefördert wird, über die das Schmiermittel auf die zu schmierenden Stellen spritzt, und Schmiermittelsysteme mit einer Pumpe - etwa eine Kreiselpumpe - mittels der das Schmiermittel lediglich zu einem Verteiler mit Vorratsbehälter gefördert wird, von wo das Schmiermittel im Wesentlichen drucklos auf die Zahneingriffe und Lagerstellen abregnet bzw. tropft. Das letzterwähnte Niederdruck-Schmiermittelsystem stellt das hier bevorzugte Pumpenanwendungsgebiet dar, insbesondere weil es gegenüber der Drucklösung Kostenvorteile bietet. So ist eine Filteranordnung zur Vermeidung einer Düsenverstopfung entbehrlich, die Verschmutzungsanfälligkeit ist insgesamt geringer, für den Elektromotor kann eine schwächere Motorleistung vorgesehen werden, etc.

Konstruktive Details einer elektromotorisch angetriebenen Kreiselpumpe für die Schmiermittelversorgung eines Getriebes sind z.B. der Druckschrift DE-A-10 2007 018 504 (Fig. 7) zu entnehmen. Hier bilden ein Elektromotor und eine von ihm angetriebene Pumpe eine Motor-Pumpen-Einheit, welche direkt im Schmiermittel (Betriebsmedium im Sprachgebrauch dieser Druckschrift) unterhalb eines Flüssigkeitsspiegels angeordnet ist. Der Elektromotor und die Pumpe liegen bei diesem Stand der Technik hintereinander, wobei die Motor-Pumpen-Einheit ferner noch von einer Leiteinrichtung umgeben ist, die dazu dient, den Ansaugstrom entlang der Oberfläche des sich betriebsbedingt erwärmenden Elektromotors bis hin zu einem Sauganschluss der Pumpe zu führen. Auch aus der Druckschrift DE-A-10 2006 012 838 (Fig. 3c) ist eine elektromotorisch angetriebene Zusatzölpumpe bekannt, die innerhalb einer Ölwanne eines Automatgetriebes angeordnet ist. Bei diesem Stand der Technik liegen die Pumpe und der Elektromotor ebenfalls hintereinander, wobei sich Letzterer außerhalb der Ölwanne befindet. Dabei erfolgt der Antrieb der Pumpe mechanisch über eine Welle, welche durch die Wand der Ölwanne hindurchgeführt und gegenüber dieser Wand abgedichtet ist.

Derartige Motor-Pumpen-Einheiten besitzen in der Regel ein mehrteiliges Gehäuse (siehe beispielsweise die Druckschrift DE-A-43 42 233, Fig. 2), in dem auch "trockene" Bereiche auf der Antriebs-, d.h. Motorseite, welche der Aufnahme der elektrischen bzw. elektronischen Komponenten (Motorwicklung, Sensorik, Steuerelektronik, etc.) dienen, von "nassen" Bereichen auf der Förder-, d.h. Pumpenseite flüssigkeitsdicht zu trennen sind. Darüber hinaus sind solche Motor-Pumpen-Einheiten geeignet gegenüber der - im Motorraum eines Kraftfahrzeugs zumeist staubigen und feuchten bzw. öligen - Umgebung und/oder an einer Flanschfläche zur Montage am Getriebegehäuse bzw. der Ölwanne abzudichten. Im Stand der Technik werden hierfür einzelne Einlegedichtungen verwendet, teilweise auch O-Ringe. Diese Dichtungen bedingen einen nicht unerheblichen Montageaufwand; zudem besteht die Gefahr, dass eine Dichtung verrutscht bzw. "wandert", so dass Undichtigkeiten und ggf. Folgeschäden insbesondere auf der Motorseite der Motor-Pumpen-Einheit entstehen.

Aus der EP 0 864 760 A2 ist eine Pumpe bekannt die direkt an einer ebenen Wandfläche einer Vorrichtung befestigt werden kann.

### AUFGABENSTELLUNG

Der Erfindung liegt die Aufgabe zugrunde, insbesondere zur Zwangsschmierung eines Schaltgetriebes für Kraftfahrzeuge eine elektromotorisch angetriebene Flüssigkeitspumpe bereitzustellen, welche im Vergleich zu dem oben geschilderten Stand der Technik einfacher und kostengünstiger zu montieren und dann zuverlässig abgedichtet ist.

### DARSTELLUNG DER ERFINDUNG

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 8.

Eine erfindungsgemäße, elektromotorisch angetriebene Flüssigkeitspumpe, die insbesondere zur Zwangsschmierung eines Schaltgetriebes für Kraftfahrzeuge einsetzbar ist, hat ein über eine pumpenäußere Flanschfläche an einem Flüssigkeitsbehälter anflanschbares Gehäuse, das einen Flüssigkeitseingang und einen Flüssigkeitsausgang besitzt und in dem ein eine Motorwicklung aufweisender Stator und ein magnetischer Rotor zur Flüssigkeitsförderung aufgenommen sind, wobei das Gehäuse mehrteilig ausgebildet ist, mit einem Pumpengehäuseabschnitt, der den Flüssigkeitseingang und den Flüssigkeitsausgang aufweist, einem Statorgehäuseabschnitt, welcher den Stator trägt und zusammen mit dem Pumpengehäuseabschnitt einen Flüssigkeitsraum begrenzt, in dem der Rotor angeordnet ist, und einem Motorgehäuseabschnitt, der zusammen mit dem Statorgehäuseabschnitt einen Elektronikraum begrenzt, in dem sich wenigstens der Stator befindet, und wobei ein Dichtelement vorgesehen ist, welches zugleich an der pumpenäußeren Flanschfläche zum Flüssigkeitsbehälter abdichtet, den Flüssigkeitsraum vom Elektronikraum trennt und den Elektronikraum zur Umgebung hin abdichtet.

Somit umfasst zunächst das Pumpengehäuse in einfacher und montagegünstiger Weise erfindungsgemäß nur ein Minimum an Gehäusebauteilen, um die "nassen" Bereiche der Pumpe von den "trockenen" Bereichen der Pumpe zu trennen und Letztere insgesamt gegenüber der Flüssigkeit bzw. Umgebung/Atmosphäre zu begrenzen, nämlich (a) den Pumpengehäuseabschnitt als über die Flüssigkeitsein- und -ausgänge definiert durchlässige Begrenzung zur Flüssigkeit, (b) den Statorgehäuseabschnitt als medientrennende Begrenzung zwischen dem "nassen" Flüssigkeitsraum und dem "trockenen" Elektronikraum in der Pumpe und (c) den Motorgehäuseabschnitt als Begrenzung zur übrigen Umgebung/Atmosphäre hin. Ferner ist erfindungsgemäß nur ein multifunktionales Dichtelement vorgesehen, das erstens an der pumpenäußeren Flanschfläche zum Flüssigkeitsbehälter abdichtet ("pumpenäußere" Trennung zwischen Flüssigkeit und Umgebung/Atmosphäre), zweitens in der Pumpe den Flüssigkeitsraum vom Elektronikraum trennt ("pumpeninnere" Medientrennung) und drittens den Elektronikraum zur Umgebung/Atmosphäre hin abdichtet (Dichtigkeit gegen Eindringen von Feuchtigkeit bzw. Verschmutzung der Pumpe).

Im Gegensatz zu dem eingangs geschilderten Stand der Technik ist also nicht eine Mehrzahl von Einlegedichtungen erforderlich bzw. zu handhaben, die damit verbundenen Nachteile (Montageaufwand, Gefahr des "Wanderns" einzelner Dichtungen, etc.) werden vermieden, ohne dass gehäuseseitige Ersatzmaßnahmen, wie z.B. eine Dichtverschweißung von Gehäusebauteilen vorgesehen werden müssen. Da die Pumpe darüber hinaus bereits die Mittel zur "pumpenäußeren" Abdichtung trägt, gestaltet sich die Montage / das Anflanschen der Pumpe am Flüssigkeitsbehälter einfacher. Insgesamt wird eine gegenüber dem Stand der Technik preiswertere, prozesssicherere und damit auch zuverlässige Pumpenabdichtung erzielt.

In einer vorteilhaften Weiterbildung der Flüssigkeitspumpe kann die pumpenäußere Flanschfläche des Gehäuses mit einer umlaufenden Nut zur Aufnahme eines ersten Dichtabschnitts des Dichtelements versehen sein, der mit wenigstens einer, vorzugsweise aber zwei Dichtlippen über die pumpenäußere Flanschfläche vorsteht, um gegenüber dem Flüssigkeitsbehälter abzudichten. Eine derartige Doppeldichtung ist besonders schmutzunempfindlich und zuverlässig dichtend. Kratzer od.dgl. an der Flanschfläche des Flüssigkeitsbehälters können "überbrückt" werden; mithin bestehen hier keine besonderen Reinheits- oder Glattheitsanforderungen an die Flanschfläche.

Vorzugsweise ist die Anordnung so getroffen, dass der Pumpengehäuseabschnitt einen Pumpengehäuseflansch aufweist, an dem auf gegenüberliegenden Seiten die pumpenäußere Flanschfläche und eine pumpeninnere Flanschfläche ausgebildet sind, die mit einer umlaufenden Nut zur Aufnahme eines zweiten Dichtabschnitts des Dichtelements versehen ist, der mit zwei Dichtlippen über die pumpeninnere Flanschfläche vorsteht, von denen - in klarer und eindeutiger Funktionszuordnung der Dichtlippen - die eine Dichtlippe mit dem Statorgehäuseabschnitt zusammenwirkt, um den Flüssigkeitsraum vom Elektronikraum zu trennen, während die andere Dichtlippe mit dem Motorgehäuseabschnitt zusammenwirkt, um den Elektronikraum zur Umgebung hin abzudichten. Dabei können die Dichtlippen in vorteilhafter Weise unterschiedliche, ggf. auch nur toleranzbedingt abweichende Gehäusedicken in den Flanschbereichen des Statorgehäuseabschnitts und des Motorgehäuseabschnitts ausgleichen.

Im weiteren Verfolg des Erfindungsgedankens kann das aus einem elastomeren Material bestehende Dichtelement am Pumpengehäuseabschnitt befestigt sein, so dass das Dichtelement in montagefreundlicher Weise verliersicherer Bestandteil der Flüssigkeitspumpe ist. Grundsätzlich kann das Dichtelement hierbei am Pumpengehäuseabschnitt eingeknüpft oder aufgesteckt sein. Im Hinblick auf eine einfache Herstellbarkeit und die Prozesssicherheit (Vermeidung von Montagefehlern) bevorzugt ist es indes, wenn das Dichtelement an dem Pumpengehäuseabschnitt formschlüssig angespritzt ist.

Für eine zuverlässige formschlüssige Festlegung des Dichtelements am Pumpengehäuseabschnitt kann zwischen der umlaufenden Nut an der pumpenäußeren Flanschfläche und der umlaufenden Nut an der pumpeninneren Flanschfläche eine Mehrzahl von in Umfangsrichtung beabstandeten Öffnungen vorgesehen sein, die mit dem elastomeren Material des Dichtelements durchspritzt sind, um den ersten Dichtabschnitt und den zweiten Dichtabschnitt des Dichtelements miteinander zu verbinden. Das Dichtelement ist somit vorteilhaft in einem Arbeitsgang am Pumpengehäuseabschnitt aufspritzbar. Bei überlappender bzw. deckungsgleicher Anordnung der Nuten auf den beiden Seiten des Pumpengehäuseflansches baut die Dichtungsanordnung auch in radialer Richtung sehr kompakt. Darüber hinaus hat eine solche Anordnung, bei der die Abdichtung zu zweiten Seiten quasi auf einem Durchmesser erfolgt, den Vorteil, dass auch bei relativ "weichen" bzw. flexiblen Gehäusebauteilen die Gefahr von gehäuseverformungsbedingten Undichtigkeiten minimiert ist.

Prinzipiell können die Gehäusebauteile der Flüssigkeitspumpe aus einem Leichtmetall, wie z.B. einer Aluminiumlegierung bestehen. Mit Blick auf geringe Herstellkosten bevorzugt ist es indes, wenn die Gehäusebauteile als Kunststoffteile ausgeführt sind, die spritztechnisch, d.h. mittels Kunststoff-Spritzgießen hergestellt werden können. Zur Befestigung der Gehäusebauteile aneinander ist beispielsweise eine Verschraubung, eine Vernietung oder eine Schnappverbindung denkbar. Für eine besonders kostengünstige Gehäuseausgestaltung ist es jedoch bevorzugt, wenn die als Kunststoffteile ausgeführten Pumpengehäuse- und Motorgehäuseabschnitte miteinander verschweißt sind.

Des Weiteren kann der Statorgehäuseabschnitt im Hinblick auf eine einfache und axial sowie radial positionsgenaue Befestigung im Gehäuse der Flüssigkeitspumpe einen Statorgehäuseflansch aufweisen, der zwischen dem Pumpengehäuseabschnitt und dem Motorgehäuseabschnitt eingespannt ist und den Statorgehäuseabschnitt am Motorgehäuseabschnitt bezüglich einer Drehachse des Rotors (mit) zentriert.

Schließlich ist es bevorzugt - insbesondere weil in axialer Richtung gesehen besonders flach bauend - wenn der zweite Dichtabschnitt des Dichtelements einen Zentrierbereich zwischen Statorgehäuseabschnitt und Motorgehäuseabschnitt in bezogen auf die Drehachse des Rotors radialer Richtung übergreift.

### KURZE BESCHREIBUNG DER ZEICHNUNGEN

Im Folgenden wird die Erfindung anhand eines bevorzugten Ausführungsbeispiels unter Bezugnahme auf die beigefügten, z.T. schematischen Zeichnungen näher erläutert, in denen zur Vereinfachung der Darstellung elastomere bzw. elastische Teile im unverformten Zustand dargestellt sind. In den Zeichnungen zeigen:
- Fig. 1: eine perspektivische Ansicht einer elektromotorisch angetriebenen Flüssigkeitspumpe nach einem bevorzugten Ausführungsbeispiel der Erfindung im nicht-montierten Zustand von schräg oben / vorne links mit Blick auf eine pumpenäußere Flanschfläche zur Befestigung an einem Flüssigkeitsbehälter, wie z.B. einem Getriebegehäuse;
- Fig. 2: eine Draufsicht auf die Flüssigkeitspumpe gemäß Fig. 1 von oben in Fig. 1;
- Fig. 3: eine gegenüber dem Maßstab der Fig. 2 vergrößerte Schnittansicht der Flüssigkeitspumpe gemäß Fig. 1 entsprechend der zweifach versetzten Schnittverlaufslinie III-III in Fig. 2 in einem an einem abgebrochen dargestellten Getriebegehäuse montierten Zustand;
- Fig. 4: eine nochmals vergrößerte Teilschnittansicht der Flüssigkeitspumpe gemäß Fig. 1 entsprechend dem Detailkreis IV in Fig. 3, zur besseren Illustration eines umlaufenden Dichtelements mit Dreifachfunktion;
- Fig. 5: eine gegenüber dem Maßstab der Fig. 2 vergrößerte Schnittansicht der Flüssigkeitspumpe gemäß Fig. 1 entsprechend der Schnittverlaufslinie V-V in Fig. 2 und
- Fig. 6: eine gegenüber dem Maßstab der Fig. 3 vergrößerte Schnittansicht der Flüssigkeitspumpe gemäß Fig. 1 entsprechend der zweifach versetzten Schnittverlaufslinie VI-VI in Fig. 3, im Gegensatz zu Fig. 3 aber im nichtmontierten Zustand, d.h. ohne Getriebegehäuse und Befestigungsmittel.

### DETAILLIERTE BESCHREIBUNG DES AUSFÜHRUNGSBEISPIELS

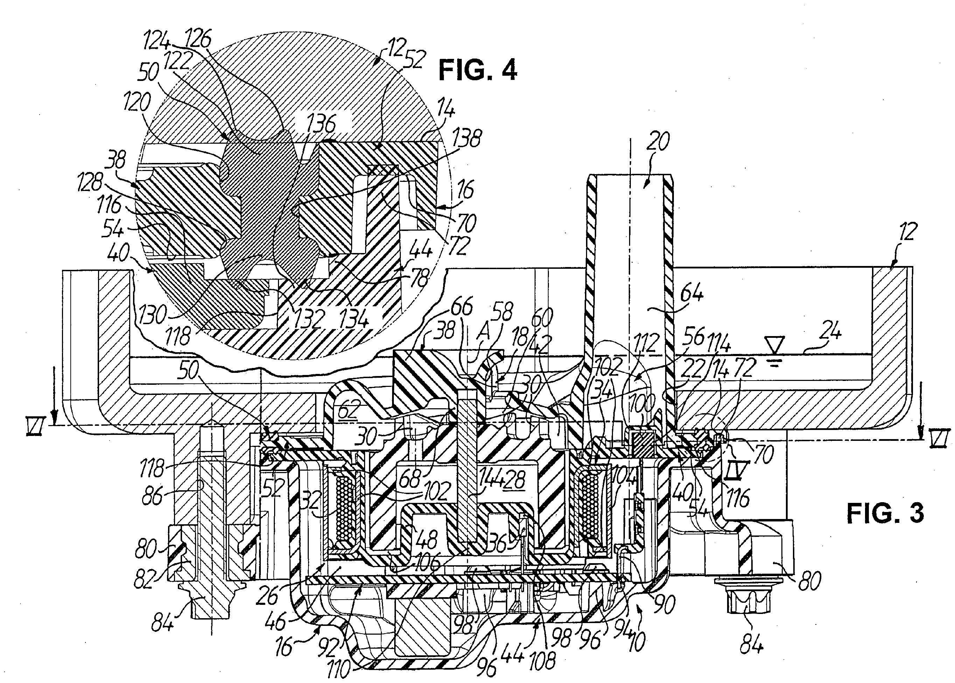

In den Figuren beziffert das Bezugszeichen 10 allgemein eine elektromotorisch angetriebene Flüssigkeitspumpe zur Zwangsschmierung eines Schaltgetriebes für Kraftfahrzeuge, von dem lediglich in Fig. 3 ein unterer Teil, nämlich ein (auch) als Flüssigkeitsbehälter dienendes Getriebegehäuse 12 abgebrochen dargestellt ist. An dem Getriebegehäuse 12 ist die Flüssigkeitspumpe 10 von außen montiert, genauer über eine pumpenäußere Flanschfläche 14 eines Gehäuses 16 der Flüssigkeitspumpe 10 angeflanscht, so dass ein Flüssigkeitseingang 18 und ein Flüssigkeitsausgang 20 der Flüssigkeitspumpe 10 durch eine Öffnung 22 im Getriebegehäuse 12 in das Getriebegehäuse 12 hineinragen. Während sich der Flüssigkeitseingang 18 unterhalb eines in Fig. 3 durch eine horizontale Linie bei 24 angedeuteten Getriebeöl-Füllstands im Getriebegehäuse 12 befindet, erstreckt sich der Flüssigkeitsausgang 20 über den Getriebeöl-Füllstand 24 nach oben hinaus, wo er auf hier nicht gezeigte Weise mit einem Verteilersystem (nicht dargestellt) für das Getriebeöl fluidverbunden ist.

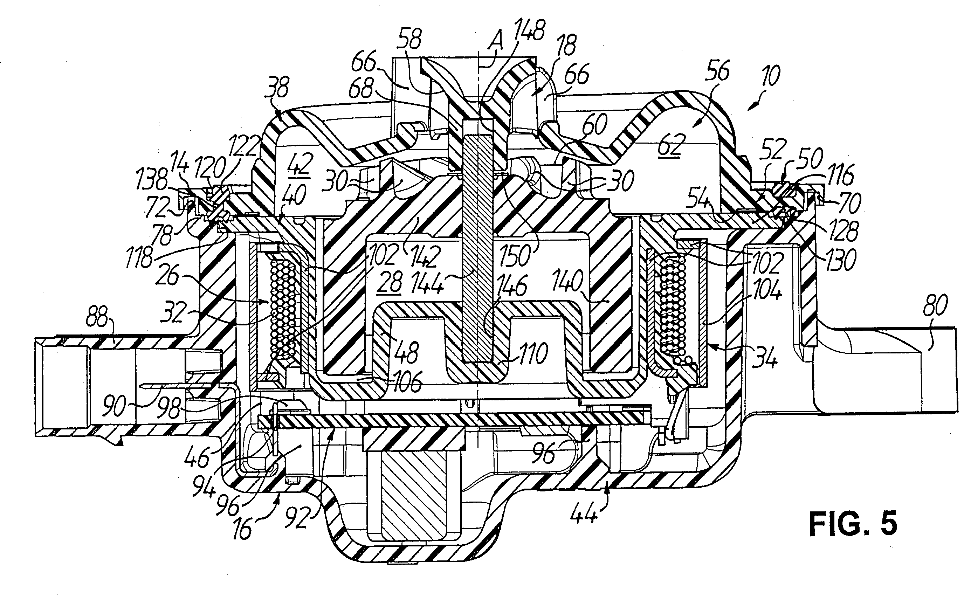

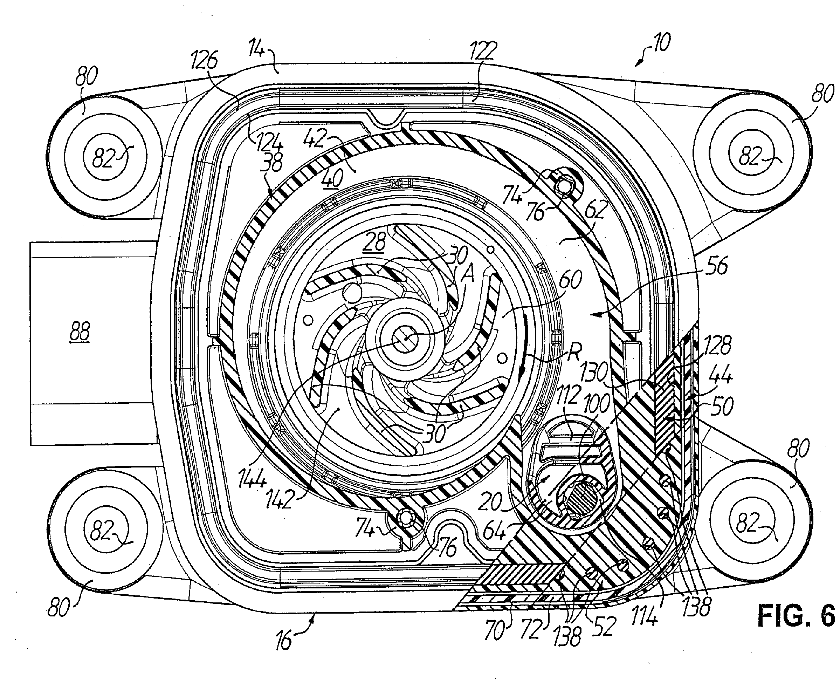

Im Gehäuse 16 ist ein elektronisch kommutierter Elektromotor 26 aufgenommen (siehe die Fig. 3 und 5), der einen um eine Drehachse A drehbaren, im Wesentlichen becherförmigen, magnetischen Rotor 28, welcher stirnseitig mit einer Mehrzahl von gekrümmten Schaufelfortsätzen 30 (vgl. insbesondere Fig. 6) als Mitteln zur Flüssigkeitsförderung versehen ist, einen eine Motorwicklung 32 aufweisenden Stator 34 sowie einen in an sich bekannter Weise für die elektronische Kommutierung benötigten Magnetfeldsensor 36 zur Drehwinkel-Lageerkennung des Rotors 28 umfasst (siehe Fig. 3). Hierbei ist das Gehäuse 16 mehrteilig, genauer dreiteilig ausgebildet, mit einem oberen Pumpengehäuseabschnitt 38, der den Flüssigkeitseingang 18 und den Flüssigkeitsausgang 20 aufweist, einem mittigen Statorgehäuseabschnitt 40, welcher den ringförmigen Stator 34 trägt, so dass dieser den Rotor 28 in bezüglich der Drehachse A koaxialer Anordnung entlang der Drehachse A gesehen wenigstens teilweise umgibt, und zusammen mit dem Pumpengehäuseabschnitt 38 einen Flüssigkeitsraum 42 begrenzt, in dem der Rotor 28 mit seinen Schaufelfortsätzen 30 angeordnet ist, und einem unteren Motorgehäuseabschnitt 44, der zusammen mit dem Statorgehäuseabschnitt 40 einen Elektronikraum 46 begrenzt, in dem sich u.a. der Stator 34 befindet.

In besonders kompakter Ausgestaltung erstreckt sich der Statorgehäuseabschnitt 40 entlang der Drehachse A gesehen in den Rotor 28 mit einem Gehäuseabsatz 48 hinein, welcher zur Aufnahme des Magnetfeldsensors 36 ausgebildet ist. Darüber hinaus ist, wie nachfolgend ebenfalls noch detailliert beschrieben werden wird, am Gehäuse 16 ein Dichtelement 50 vorgesehen, welches in einer Dreifachfunktion zugleich an der pumpenäußeren Flanschfläche 14 des Gehäuses 16 gegenüber dem Getriebegehäuse 12 abdichtet, den Flüssigkeitsraum 42 vom Elektronikraum 46 trennt und den Elektronikraum 46 zur Umgebung hin abdichtet.

Weitere Details zu dem als Kunststoffteil aus einem lasertransparenten, glasfaserverstärkten Polyphtalamid (PPA 35 GF) ausgeführten Pumpengehäuseabschnitt 38 sind insbesondere den Fig. 3, 5 und 6 zu entnehmen. Demgemäß weist der Pumpengehäuseabschnitt 38 radial außen einen Pumpengehäuseflansch 52 auf, an dem auf gegenüberliegenden Seiten die pumpenäußere Flanschfläche 14 und eine pumpeninnere Flanschfläche 54 ausgebildet sind. An dem Pumpengehäuseflansch 52 des Pumpengehäuseabschnitts 38 ist das aus einem elastomeren Material bestehende Dichtelement 50 auf noch zu beschreibende Weise befestigt.

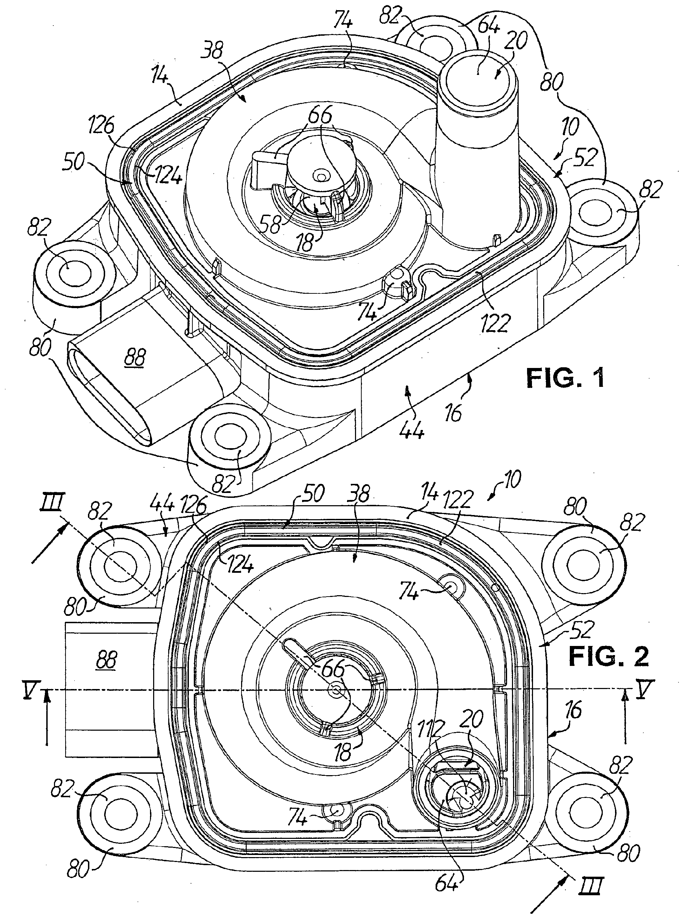

Radial innerhalb des Pumpengehäuseflansches 52 ist der Pumpengehäuseabschnitt 38 domartig erhaben ausgebildet und begrenzt, z.T. zusammen mit dem Rotor 28 und dem Statorgehäuseabschnitt 40, im Bereich des Flüssigkeitsraums 42 einen Pumpenkanal 56, der im Wesentlichen in vier Bereiche unterteilt werden kann, nämlich - von radial innen nach radial außen gesehen - (1.) einen zentralen, d.h. bezüglich der Drehachse A zentrierten, im Wesentlichen trichterförmigen Eingangsbereich 58 (siehe insbesondere Fig. 5), (2.) einen mittleren, im Wesentlichen ringförmigen Beschleunigungsbereich 60, in dem sich im Betrieb der Flüssigkeitspumpe 10 die Schaufelfortsätze 30 des Rotors 28 bewegen, und (3.) einen im Wesentlichen schneckenförmigen Förderbereich 62 (siehe hierzu auch die Fig. 1 und 2), welcher schließlich (4.) in einem rohrförmigen Ausgangsbereich 64 mündet, der sich an den Pumpengehäuseflansch 52 angrenzend im Wesentlichen parallel zur Drehachse A erstreckt. Der im Wesentlichen trichterförmige Eingangsbereich 58, welcher gegenüber dem mittleren Beschleunigungsbereich 60 des Pumpenkanals 56 axial vorsteht, bildet außenumfangsseitig den Flüssigkeitseingang 18 des Gehäuses 16, der somit im Wesentlichen quer zur Drehachse A des Rotors 28 ausgerichtet ist und über den - wie am besten in den Fig. 1 und 2 zu erkennen ist - fast vollumfänglich (annähernd 360°), d.h. nur durch drei in radialer Richtung verlaufende Stege 66 unterbrochen die Flüssigkeit (hier das Getriebeöl) in die Flüssigkeitspumpe 10 zulaufen kann. Im trichterförmigen Eingangsbereich 58 erfährt die Flüssigkeit sodann eine Strömungsumlenkung um 90° (von radial in Richtung der Drehachse A nach axial entlang der Drehachse A) bis sie auf den Rotor 28 mit seinen Schaufelfortsätzen 30 trifft, wo eine weitere Strömungsumlenkung um etwa 90° erfolgt (von axial entlang der Drehachse A nach radial weg von der Drehachse A). Im mittleren Beschleunigungsbereich 60 des Pumpenkanals 56, der im Schnitt (Fig. 3, 5) gesehen mit etwa konstantem Strömungsquerschnitt von dem Pumpengehäuseabschnitt 38 und dem Rotor 28 auf gegenüberliegenden Seiten in axialer Richtung begrenzt ist, wird die Flüssigkeit sodann infolge der Formgebung der Schaufelfortsätze 30 nach radial außen und in Umfangsrichtung entsprechend der Drehrichtung R des Rotors 28 (siehe Fig. 6) beschleunigt, worauf sie in den im Wesentlichen schneckenförmigen Förderbereich 62 gelangt. Im Förderbereich 62 des Pumpenkanals 56, der auf der einen axialen Seite von (eingangs) dem Rotor 28 und dem Statorgehäuseabschnitt 40 und auf der anderen axialen Seite sowie umfangsseitig von dem Pumpengehäuseabschnitt 38 mit sich in Drehrichtung R gesehen entsprechend dem Schneckenverlauf vergrößerndem Strömungsquerschnitt begrenzt ist, wird die Flüssigkeit sodann im Wesentlichen in Umfangsrichtung zum rohrförmigen Ausgangsbereich 64 gefördert. Eingangs des Ausgangsbereichs 64 erfolgt dann nochmals eine Strömungsumlenkung der Flüssigkeit um ca. 90° (von im Wesentlichen in Umfangsrichtung nach axial parallel zur Drehachse A), worauf die Flüssigkeit entlang des konstanten kreisförmigen Strömungsquerschnitts des Ausgangsbereichs 64 fließt, um schließlich über den vom Ausgangsbereich 64 gebildeten Flüssigkeitsausgang 20 von der Flüssigkeitspumpe 10 abgegeben zu werden.

Gemäß den Fig. 3 und 5 besitzt der Pumpengehäuseabschnitt 38 ferner an zentraler Stelle, d.h. dem Eingangsbereich 58 angrenzend einen Lagerfortsatz 68 zur noch zu beschreibenden Lagerung des Rotors 28. Was die Verbindung des spritzgegossenen Pumpengehäuseabschnitts 38 mit den anderen Teilen des Gehäuses 16 angeht, bliebe zum Pumpengehäuseabschnitt 38 schließlich noch zu erwähnen, dass der Pumpengehäuseflansch 52 radial außerhalb der pumpeninneren Flanschfläche 54 und an diese angrenzend mit einer umlaufenden Nut 70 zur Aufnahme eines in einer Draufsicht gesehen im Wesentlichen komplementär .geformten, umlaufenden Bundes 72 am Motorgehäuseabschnitt 44 versehen ist. Darüber hinaus weist der Pumpengehäuseabschnitt 38 gemäß den Fig. 1, 2 und 6 bei 74 Aufnahmen (in Fig. 6 unten mittig mit Passloch und oben rechts mit Langloch) für am Statorgehäuseabschnitt 40 angeformte Positionierstifte 76 (siehe wiederum Fig. 6) auf, die dazu dienen, den Statorgehäuseabschnitt 40 bezüglich des Pumpengehäuseabschnitts 38 auszurichten.

Der ebenfalls als Kunststoffteil aus einem glasfaserverstärkten Polyphtalamid (PPA 50 GF) spritzgegossene Motorgehäuseabschnitt 44 ist mit dem Pumpengehäuseabschnitt 38 - mittelbar über den Statorgehäuseabschnitt 40 geeignet ausgerichtet - laserverschweißt, und zwar umlaufend mit seinem Bund 72 in der Nut 70 des Pumpengehäuseflansches 52 (in Fig. 4 durch die Kreuzschraffur am Grund der Nut 70 angedeutet). Dabei stützt sich gemäß den Fig. 4 und 5 der Pumpengehäuseabschnitt 38 über die pumpeninnere Flanschfläche 54 des Pumpengehäuseflansches 52 an einer umlaufenden, sich an den Bund 72 nach radial innen anschließenden Schulter 78 des Motorgehäuseabschnitts 44 ab.

Radial außen weist der Motorgehäuseabschnitt 44 im dargestellten Ausführungsbeispiel vier Befestigungsaugen 80 auf, die jeweils mit einer formschlüssig umspritzten, metallischen Hülse 82 ausgekleidet sind. Wie in Fig. 3 dargestellt ist werden die Hülsen 82 im montierten Zustand der Flüssigkeitspumpe 10 von Kopfschrauben 84 durchgriffen, die in jeweils zugeordneten, um die Öffnung 22 herum verteilten Gewindebohrungen 86 im Getriebegehäuse 12 eingeschraubt sind, um die Flüssigkeitspumpe 10 von außen am Getriebegehäuse 12 zu befestigen und dabei auch die einzelnen Teile des Gehäuses 16 fest miteinander zu verbinden. Die oben angesprochene Schweißverbindung zwischen Pumpengehäuseabschnitt 38 und Motorgehäuseabschnitt 44 dient demgegenüber vornehmlich als Transportsicherung.

Zwischen den in den Fig. 1, 2 und 6 linken Befestigungsaugen 80 ist der Motorgehäuseabschnitt 44 mit einem Steckerkragen 88 für einen Elektroanschluss der Flüssigkeitspumpe 10 versehen. Im Schnitt gemäß Fig. 5 ist in diesem Zusammenhang exemplarisch zu erkennen, dass Elektroleiter 90 in dem Motorgehäuseabschnitt 44 eingelassen bzw. -gespritzt sind, die aus dem Bereich des Steckerkragens 88 in den Elektronikraum 46 hineinführen. Die Schnitte gemäß den Fig. 4 und 5 zeigen auch, dass in dem Elektronikraum 46 des Gehäuses 16 eine Elektronikplatine 92 mit an sich bekannten, zur Pumpensteuerung benötigten elektronischen Bauteilen integriert ist. Die Elektronikplatine 92 selbst ist über Press-Fit-Verbindungen, von denen in Fig. 5 eine Verbindung bei 94 gezeigt ist, zu den Elektroleitern 90 im Motorgehäuseabschnitt 44 kontaktiert und stützt sich auf am Motorgehäuseabschnitt 44 innen angeformten Vorsprüngen 96 ab, an denen die Elektronikplatine 92 zudem z.T. mittels Schrauben 98 befestigt ist. Analog den Positionierstiften 76 zum Pumpengehäuseabschnitt 38 hat der Statorgehäuseabschnitt 40 auch nach in den Fig. 3 und 5 unten Positionierstifte (hier nicht zu sehen), die in zugeordnete Löcher (Passloch und Langloch; in den Figuren nicht gezeigt) im Motorgehäuseabschnitt 44 eingreifen und sich dabei durch entsprechende Löcher (nicht dargestellt) in der Elektronikplatine 92 hindurcherstrecken. Die elektrischen Teile der Flüssigkeitspumpe 10 sind ebenfalls über Press-Fit-Verbindungen 94 zu der Elektronikplatine 92 kontaktiert; hiervon ist lediglich in Fig. 3 beispielhaft die Press-Fit-Verbindung 94 zu einem im Statorgehäuseabschnitt 40 eingelassen bzw. -gespritzten weiteren Elektroleiter 90 gezeigt, an dem ein Temperatursensor 100 angeschlossen ist. Entsprechende elektrische Verbindungen (nicht näher gezeigt) bestehen zur Motorwicklung 32 und zum Magnetfeldsensor 36.

Auch der Statorgehäuseabschnitt 40 ist als Kunststoffteil aus einem glasfaserverstärkten Polyphtalamid (PPA 50 GF) spritzgegossen. Hierbei werden sowohl besagte Elektroleiter 90 als auch Polbleche 102 des Stators 34 durch Umspritzen mit dem Kunststoffmaterial des Statorgehäuseabschnitts 40 eingebettet. Erst nach dem Spritzgießvorgang wird die Motorwicklung 32 aufgebracht, die in kostengünstiger Weise als orthogonale Lagenwicklung ausgeführt ist. Vervollständigt wird der Stator 34 durch einen geschlitzten (nicht gezeigt), metallischen Rückschlussring 104, der auf nach radial außen vorstehende Ränder der Polbleche 102 kraftschlüssig aufgezogen und zudem mit den Rändern der Polbleche 102 verkrimpt wird (in den Figuren nicht sichtbar) .

Der den Stator 34 tragende Bereich des Statorgehäuseabschnitts 40 umgibt den zentralen Gehäuseabsatz 48 des Statorgehäuseabschnitts 40 in bezüglich der Drehachse A koaxialer Lagebeziehung unter Belassung eines Ringraums 106, in den der Rotor 28 eintaucht. An einer radial außen liegenden Stelle des Gehäuseabsatzes 48 ist dieser gemäß Fig. 3 mit einer zum Motorgehäuseabschnitt 44 hin offenen Aussparung 108 zur Aufnahme des Magnetfeldsensors 36 - bei dem es sich z.B. um ein Hallelement handeln kann - versehen. Gemäß den Fig. 3 und 5 ist an dem Gehäuseabsatz 48 des Statorgehäuseabschnitts 40 auf der vom Pumpengehäuseabschnitt 38 abgewandten Seite ferner an mittiger Stelle ein weiterer Lagerfortsatz 110 für die Lagerung des Rotors 28 vorgesehen.

Gemäß den Fig. 2, 3 und 6 ragt des Weiteren ein Teilbereich 112 des Statorgehäuseabschnitts 40 in radialer Richtung gesehen an den Stator 34 angrenzend und axial in Richtung des Pumpengehäuseabschnitts 38 rampenartig über den übrigen Statorgehäuseabschnitt 40 vor und bildet somit einen Strömungsverluste reduzierenden, "weichen" Übergang zwischen dem schneckenförmigen Förderbereich 62 und dem rohrförmigen Ausgangsbereich 64 des Pumpenkanals 56. Dieser Teilbereich 112 des Statorgehäuseabschnitts 40 ist gemäß den Fig. 3 und 6 mit einer zum Motorgehäuseabschnitt 44 hin offenen Aufnahmeaussparung 114 für den Temperatursensor 100 versehen, so dass Letzterer nahe dem Flüssigkeitsausgang 20 in dem Gehäuse 16 der Flüssigkeitspumpe 10 integriert ist.

Radial außen weist der Statorgehäuseabschnitt 40 schließlich einen Statorgehäuseflansch 116 auf, der zwischen dem Pumpengehäuseabschnitt 38 und dem Motorgehäuseabschnitt 44 sandwichartig eingespannt ist und den Statorgehäuseabschnitt 40 in einem zugeordneten Absatz 118 am Motorgehäuseabschnitt 44 bezüglich der Drehachse A radial mit zentriert.

Weitere Details zu dem umlaufenden, zur Vereinfachung der Darstellung unverformt gezeigten Dichtelement 50 sind insbesondere den Fig. 4 und 6 zu entnehmen. Demgemäß ist der Pumpengehäuseflansch 52 des Pumpengehäuseabschnitts 38 ausgehend von der pumpenäußeren Flanschfläche 14 des Gehäuses 16 mit einer umlaufenden Vertiefung oder Nut 120 zur Aufnahme eines ersten Dichtabschnitts 122 des Dichtelements 50 versehen, der mit zwei Dichtlippen 124, 126, d.h. einer radial inneren Dichtlippe 124 und einer radial äußeren Dichtlippe 126 über die pumpenäußere Flanschfläche 14 vorsteht, um gegenüber dem Getriebegehäuse 12 abzudichten. Ferner ist der Pumpengehäuseflansch 52 ausgehend von der pumpeninneren Flanschfläche 54 mit einer weiteren umlaufenden Vertiefung oder Nut 128 zur Aufnahme eines zweiten Dichtabschnitts 130 des Dichtelements 50 versehen. Letzterer steht mit zwei Dichtlippen 132, 134 über die pumpeninnere Flanschfläche 54 vor, von denen die eine, radial innere Dichtlippe 132 mit dem Statorgehäuseflansch 116 des Statorgehäuseabschnitts 40 zusammenwirkt, um den Flüssigkeitsraum 42 vom Elektronikraum 46 zu trennen. Die andere, radial äußere Dichtlippe 134 hingegen wirkt mit einer zugeordneten Schulter 136 des Motorgehäuseabschnitts 44 zusammen, um den Elektronikraum 46 zur Umgebung hin abzudichten. Dabei übergreift bzw. überdeckt der zweite Dichtabschnitt 130 des Dichtelements 50 den Zentrierbereich zwischen dem Statorgehäuseflansch 116 des Statorgehäuseabschnitts 40 und dem Absatz 118 am Motorgehäuseabschnitt 44 in bezogen auf die Drehachse A des Rotors 28 radialer Richtung, wobei infolge der Verformung der Dichtlippen 132, 134 auch eine definierte Vorspannkraft zwischen den einzelnen Teilen des Gehäuses 16 erzeugt wird.

Im dargestellten Ausführungsbeispiel ist das Dichtelement 50 am Pumpengehäuseflansch 52 des Pumpengehäuseabschnitts 38 formschlüssig angespritzt. Hierfür ist zwischen der umlaufenden Nut 120 an der pumpenäußeren Flanschfläche 14 und der umlaufenden Nut 128 an der pumpeninneren Flanschfläche 54 eine Mehrzahl von in Umfangsrichtung, d.h. entlang der Nuten 120, 128 gesehen vorzugsweise gleichmäßig beabstandeten Öffnungen 138 im Pumpengehäuseflansch 52 ausgebildet, welche die Nuten 120, 128 verbinden und mit dem elastomeren Material des Dichtelements 50 durchspritzt sind, um den ersten Dichtabschnitt 122 und den zweiten Dichtabschnitt 130 des Dichtelements 50 stoffschlüssig miteinander zu verbinden.

Weitere Einzelheiten zum Rotor 28 und dessen Lagerung im Gehäuse 16 zeigt schließlich insbesondere die Fig. 5. Der Rotor 28 besitzt einen mit der Motorwicklung 32 des Stators 34 in an sich bekannter Weise zusammenwirkenden permanentmagnetischen äußeren Zylinderabschnitt 140 sowie einen auf der vom Gehäuseabsatz 48 des Statorgehäuseabschnitts 40 abgewandten Seite mit den Schaufelfortsätzen 30 als Flügelrad ausgebildeten Bodenabschnitt 142 und besteht aus einem kunststoffgebundenen Magnetmaterial, welches direkt auf eine im Gehäuse 16 drehbar gelagerte, metallische (vorzugsweise Stahl) Rotorwelle 144 unter Formgebung auch der Schaufelfortsätze 30 aufgespritzt ist. Die Rotorwelle 144 ist zu beiden Seiten des Bodenabschnitts 142 radial unmittelbar, d.h. ohne Lagerbuchsen od.dgl. im Gehäuse 16 gelagert, nämlich einerseits in einer zylindrischen Aussparung 146 am Lagerfortsatz 110 im Gehäuseabsatz 48 des Statorgehäuseabschnitts 40 und andererseits in einer zylindrischen Aussparung 148 am Lagerfortsatz 68 des Pumpengehäuseabschnitts 38. Hierbei stützt sich die Rotorwelle 144 in Fig. 5 unten axial, d.h. stirnseitig am Grund der Aussparung 146 im Lagerfortsatz 110 ab. In Fig. 5 oben kann zwischen dem Bodenabschnitt 142 des Rotors 28 und dem Lagerfortsatz 68 eine die Rotorwelle 144 umgebende Anlaufscheibe 150 vorgesehen sein, über die sich der Rotor 28 im Betrieb der Flüssigkeitspumpe 10 axial am Lagerfortsatz 68 abstützt, wenn der Rotor 28 aufgrund der sich an ihm einstellenden Druckverhältnisse gegen die Schwerkraft angehoben wird.

Eine elektromotorisch angetriebene Flüssigkeitspumpe, die zur Zwangsschmierung eines Kraftfahrzeug-Schaltgetriebes einsetzbar ist, hat ein über eine Flanschfläche an einem Flüssigkeitsbehälter anflanschbares Gehäuse, das Flüssigkeitsein- und -ausgänge besitzt und in dem ein eine Motorwicklung aufweisender Stator und ein magnetischer Rotor zur Flüssigkeitsförderung aufgenommen sind. Das Gehäuse ist dabei mehrteilig ausgebildet, mit einem Pumpengehäuseabschnitt, der die Flüssigkeitsein- und -ausgänge aufweist, einem Statorgehäuseabschnitt, welcher den Stator trägt und zusammen mit dem Pumpengehäuseabschnitt einen Flüssigkeitsraum begrenzt, in dem der Rotor angeordnet ist, und einem Motorgehäuseabschnitt, der zusammen mit dem Statorgehäuseabschnitt einen Elektronikraum begrenzt, in dem sich wenigstens der Stator befindet. Ferner ist ein Dichtelement vorgesehen, welches zugleich an der Flanschfläche zum Flüssigkeitsbehälter abdichtet, Flüssigkeitsraum und Elektronikraum trennt und Letzteren zur Umgebung hin abdichtet, so dass die Flüssigkeitspumpe insgesamt einfach und kostengünstig zu montieren und dann zuverlässig abgedichtet ist.

### BEZUGSZEICHENLISTE

- 10: Flüssigkeitspumpe
- 12: Getriebegehäuse
- 14: pumpenäußere Flanschfläche
- 16: Gehäuse
- 18: Flüssigkeitseingang
- 20: Flüssigkeitsausgang
- 22: Öffnung
- 24: Getriebeöl-Füllstand
- 26: Elektromotor
- 28: Rotor
- 30: Schaufelfortsatz
- 32: Motorwicklung
- 34: Stator
- 36: Magnetfeldsensor
- 38: Pumpengehäuseabschnitt
- 40: Statorgehäuseabschnitt
- 42: Flüssigkeitsraum
- 44: Motorgehäuseabschnitt
- 46: Elektronikraum
- 48: Gehäuseabsatz
- 50: Dichtelement
- 52: Pumpengehäuseflansch
- 54: pumpeninnere Flanschfläche
- 56: Pumpenkanal
- 58: trichterförmiger Eingangsbereich
- 60: ringförmiger Beschleunigungsbereich
- 62: schneckenförmiger Förderbereich
- 64: rohrförmiger Ausgangsbereich
- 66: Steg
- 68: Lagerfortsatz
- 70: Nut
- 72: Bund
- 74: Aufnahme
- 76: Positionierstift
- 78: Schulter
- 80: Befestigungsauge
- 82: Hülse
- 84: Kopfschraube
- 86: Gewindebohrung
- 88: Steckerkragen
- 90: Elektroleiter
- 92: Elektronikplatine
- 94: Press-Fit-Verbindung
- 96: Vorsprung
- 98: Schraube
- 100: Temperatursensor
- 102: Polblech
- 104: Rückschlussring
- 106: Ringraum
- 108: Aussparung
- 110: Lagerfortsatz
- 112: Teilbereich
- 114: Aufnahmeaussparung
- 116: Statorgehäuseflansch
- 118: Absatz
- 120: Nut
- 122: erster Dichtabschnitt
- 124: Dichtlippe
- 126: Dichtlippe
- 128: Nut
- 130: zweiter Dichtabschnitt
- 132: Dichtlippe
- 134: Dichtlippe
- 136: Schulter
- 138: Öffnung
- 140: Zylinderabschnitt
- 142: Bodenabschnitt
- 144: Rotorwelle
- 146: Aussparung
- 148: Aussparung
- 150: Anlaufscheibe

- A: Drehachse
- R: Drehrichtung

## Patentansprüche

1. Elektromotorisch angetriebene Flüssigkeitspumpe (10), insbesondere zur Zwangsschmierung eines Schaltgetriebes für Kraftfahrzeuge, mit einem über eine pumpenäußere Flanschfläche (14) an einem Flüssigkeitsbehälter (12) anflanschbaren Gehäuse (16), das einen Flüssigkeitseingang (18) und einen Flüssigkeitsausgang (20) besitzt und in dem ein eine Motorwicklung (32) aufweisender Stator (34) und ein magnetischer Rotor (28) zur Flüssigkeitsförderung aufgenommen sind, wobei das Gehäuse (16) mehrteilig ausgebildet ist, mit einem Pumpengehäuseabschnitt (38), der den Flüssigkeitseingang (18) und den Flüssigkeitsausgang (20) aufweist, einem Statorgehäuseabschnitt (40), welcher den Stator (34) trägt und zusammen mit dem Pumpengehäuseabschnitt (38) einen Flüssigkeitsraum (42) begrenzt, in dem der Rotor (28) angeordnet ist, und einem Motorgehäuseabschnitt (44), der zusammen mit dem Statorgehäuseabschnitt (40) einen Elektronikraum (46) begrenzt, in dem sich wenigstens der Stator (34) befindet, **dadurch gekennzeichnet, dass** ein Dichtelement (50) vorgesehen ist, welches zugleich an der pumpenäußeren Flanschfläche (14) zum Flüssigkeitsbehälter (12) abdichtet, den Flüssigkeitsraum (42) vom Elektronikraum (46) trennt und den Elektronikraum (46) zur Umgebung hin abdichtet.

2. Flüssigkeitspumpe (10) nach Anspruch 1, wobei die pumpenäußere Flanschfläche (14) des Gehäuses (16) mit einer umlaufenden Nut (120) zur Aufnahme eines ersten Dichtabschnitts (122) des Dichtelements (50) versehen ist, der mit zwei Dichtlippen (124, 126) über die pumpenäußere Flanschfläche (14) vorsteht, um gegenüber dem Flüssigkeitsbehälter (12) abzudichten.

3. Flüssigkeitspumpe (10) nach Anspruch 1 oder 2, wobei der Pumpengehäuseabschnitt (38) einen Pumpengehäuseflansch (52) aufweist, an dem auf gegenüberliegenden Seiten die pumpenäußere Flanschfläche (14) und eine pumpeninnere Flanschfläche (54) ausgebildet sind, die mit einer umlaufenden Nut (128) zur Aufnahme eines zweiten Dichtabschnitts (130) des Dichtelements (50) versehen ist, der mit zwei Dichtlippen (132, 134) über die pumpeninnere Flanschfläche (54) vorsteht, von denen die eine Dichtlippe (132) mit dem Statorgehäuseabschnitt (40) zusammenwirkt, um den Flüssigkeitsraum (42) vom Elektronikraum (46) zu trennen, während die andere Dichtlippe (134) mit dem Motorgehäuseabschnitt (44) zusammenwirkt, um den Elektronikraum (46) zur Umgebung hin abzudichten.

4. Flüssigkeitspumpe (10) nach einem der vorhergehenden Ansprüche, wobei das aus einem elastomeren Material bestehende Dichtelement (50) am Pumpengehäuseabschnitt (38) befestigt, insbesondere an dem Pumpengehäuseabschnitt (38) formschlüssig angespritzt ist.

5. Flüssigkeitspumpe (10) nach den Ansprüchen 2 bis 4, wobei zwischen der umlaufenden Nut (120) an der pumpenäußeren Flanschfläche (14) und der umlaufenden Nut (128) an der pumpeninneren Flanschfläche (54.)eine Mehrzahl von in Umfangsrichtung beabstandeten Öffnungen (138) vorgesehen ist, die mit dem elastomeren Material des Dichtelements (50) durchspritzt sind, um den ersten Dichtabschnitt (122) und den zweiten Dichtabschnitt (130) des Dichtelements (50) miteinander zu verbinden.

6. Flüssigkeitspumpe (10) nach einem der vorhergehenden Ansprüche, wobei der Pumpengehäuseabschnitt (38) und der Motorgehäuseabschnitt (44) als Kunststoffteile ausgeführt und miteinander verschweißt sind.

7. Flüssigkeitspumpe (10) nach einem der vorhergehenden Ansprüche, wobei der Statorgehäuseabschnitt (40) einen Statorgehäuseflansch (116) aufweist, der zwischen dem Pumpengehäuseabschnitt (38) und dem Motorgehäuseabschnitt (44) eingespannt ist und den Statorgehäuseabschnitt (40) am Motorgehäuseabschnitt (44) bezüglich einer Drehachse (A) des Rotors (28) zentriert.

8. Flüssigkeitspumpe (10) nach wenigstens den Ansprüchen 3 und 7, wobei der zweite Dichtabschnitt (130) des Dichtelements (50) einen Zentrierbereich zwischen Statorgehäuseabschnitt (40) und Motorgehäuseabschnitt (44) in bezogen auf die Drehachse (A) des Rotors (28) radialer Richtung übergreift.

## Claims

1. Electric motor driven liquid pump (10), particularly for forced lubrication of a manual transmission for motor vehicles, with a housing (16), which can be flange-mounted on a liquid container (12) by way of a flange surface (14) external to the pump and has a liquid inlet (18) and a liquid outlet (20) and in which a stator (34) having a motor winding (32) and a magnetic rotor (28) for conveying liquid are received, wherein the housing (16) is of multi-part construction with a pump housing section (38) which has the liquid inlet (18) and the liquid outlet (20), a stator housing section (40) which carries the stator (34) and together with the pump housing section (38) bounds a liquid chamber (42) in which the rotor (28) is arranged, and a motor housing section (44) which together with the stator housing section (40) bounds an electronics chamber (46) in which at least the stator (34) is disposed, **characterized in that** a sealing element (50) is provided, which simultaneously seals at the flange surface (14) external to the pump with respect to the liquid container (12), separates the liquid chamber (42) from the electronics chamber (46) and seals the electronics chamber (46) relative to the environment.

2. Liquid pump (10) according to claim 1, wherein the flange surface (14), which is external to the pump, of the housing (16) is provided with an encircling groove (120) for reception of a first sealing section (122) of the sealing element (50), which protrudes by two sealing lips (124, 126) beyond the flange surface (14) external to the pump so as to seal relative to the liquid container (12).

3. Liquid pump (10) according to claim 1 or 2, wherein the pump housing section (38) has a pump housing flange (52) at which the flange surface (14) external to the pump and a flange surface (54) internal to the pump are formed on opposite sides, the flange surface internal to the pump being provided with an encircling groove (128) for reception of a second sealing section (130) of the sealing element (50), which protrudes by two sealing lips (132, 134) beyond the flange surface (54) internal to the pump, one sealing lip (132) co-operating with the stator housing section (40) so as to separate the liquid chamber (42) from the electronics chamber (46) and the other sealing lip (134) co-operating with the motor housing section (44) so as to seal the electronics chamber (46) relative to the environment.

4. Liquid pump (10) according to any one of the preceding claims, wherein the sealing element (50) consisting of an elastomeric material is attached to the pump housing section (38), in particular injection molded at the pump housing section (38) to interlock therewith.

5. Liquid pump (10) according to any one of claims 2 to 4, wherein a plurality of openings (138) spaced apart in circumferential direction is provided between the encircling groove (120) at the flange surface (14) external to the pump and the encircling groove (128) at the flange surface (54) internal to the pump, the elastomeric material of the sealing element (50) being injection-molded through the openings so as to interconnect the first sealing section (122) and the second sealing section (130) of the sealing element (50).

6. Liquid pump (10) according to any one of the preceding claims, wherein the pump housing section (38) and the motor housing section (44) are constructed as plastics material parts and are welded together.

7. Liquid pump (10) according to any one of the preceding claims, wherein the stator housing section (40) has a stator housing flange (116) which is clamped in place between the pump housing section (38) and the motor housing section (44) and centers the stator housing section (40) at the motor housing section (44) with respect to an axis (A) of rotation of the rotor (28).

8. Liquid pump (10) according to at least claims 3 and 7, wherein the second sealing section (130) of the sealing element (50) extends over a centering region between the stator housing section (40) and the motor housing section (44) in radial direction with respect to the axis (A) of rotation of the rotor (28) .

## Revendications

1. Pompe à liquides (10) entraînée par moteur électrique, notamment destinée à la lubrification forcée d'une boite de vitesses pour véhicules automobiles, comprenant un carter (16), qui peut être bridé sur un réservoir de liquide (12) par l'intermédiaire d'une surface de bridage (14) extérieure de la pompe, et qui possède une entrée de liquide (18) et une sortie de liquide (20), et dans lequel sont reçus un stator (34) présentant un enroulement de moteur (32), et un rotor magnétique (28) pour assurer le refoulement de liquide, pompe
dans laquelle le carter (16) est d'une configuration en plusieurs parties, et comporte une partie de carter de pompe (38), qui présente l'entrée de liquide (18) et la sortie de liquide (20), une partie de carter de stator (40), qui porte le stator (34) et délimite, en commun avec la partie de carter de pompe (38), une chambre de liquide (42) dans laquelle est agencé le rotor (28), et une partie de carter de moteur (44), qui délimite, en commun avec la partie de carter de stator (40), une chambre d'électronique (46) dans laquelle se trouve au moins le stator (34),
**caractérisée en ce qu'**il est prévu un élément d'étanchéité (50), qui, simultanément, assure l'étanchéité sur la surface de bridage (14) extérieure de la pompe par rapport au réservoir de liquide (12), sépare la chambre de liquide (42) de la chambre d'électronique (46), et assure l'étanchéité de la chambre d'électronique (46) par rapport à l'environnement.

2. Pompe à liquides (10) selon la revendication 1, dans laquelle la surface de bridage (14) extérieure de la pompe du carter (16) est munie d'une rainure périphérique (120) destinée à accueillir un premier tronçon d'étanchéité (122) de l'élément d'étanchéité (50), qui fait saillie, avec deux lèvres d'étanchéité (124, 126), de la surface de bridage (14) extérieure de la pompe, en vue d'assurer l'étanchéité par rapport au réservoir de liquide (12).

3. Pompe à liquides (10) selon la revendication 1 ou la revendication 2, dans laquelle la partie de carter de pompe (38) présente une bride de carter de pompe (52) sur laquelle sont formées, sur des côtés opposés, la surface de bridage (14) extérieure de la pompe et une surface de bridage (54) intérieure de la pompe, qui est munie d'une rainure périphérique (128) destinée à accueillir un deuxième tronçon d'étanchéité (130) de l'élément d'étanchéité (50), qui fait saillie, avec deux lèvres d'étanchéité (132, 134), de la surface de bridage (54) intérieure de la pompe, et dont une lèvre d'étanchéité (132) interagit avec la partie de carter de stator (40) pour séparer la chambre de liquide (42) de la chambre d'électronique (46), tandis que l'autre lèvre d'étanchéité (134) interagit avec la partie de carter de moteur (44) en vue d'assurer l'étanchéité de la chambre d'électronique (46) par rapport à l'environnement.

4. Pompe à liquides (10) selon l'une des revendications précédentes, dans laquelle l'élément d'étanchéité (50) réalisé en un matériau élastomère, est fixé à la partie de carter de pompe (38), à savoir notamment par complémentarité de formes en étant moulé par injection sur la partie de carter de pompe (38).

5. Pompe à liquides (10) selon les revendications 2 à 4, dans laquelle entre la rainure périphérique (120) sur la surface de bridage (14) extérieure de la pompe et la rainure périphérique (128) sur la surface de bridage (54) intérieure de la pompe, sont prévues une pluralité d'ouvertures (138) qui sont espacées les unes des autres dans la direction périphérique, et sont traversées par le matériau élastomère injecté de l'élément d'étanchéité (50), en vue de relier mutuellement le premier tronçon d'étanchéité (122) et le deuxième tronçon d'étanchéité (130) de l'élément d'étanchéité (50).

6. Pompe à liquides (10) selon l'une des revendications précédentes, dans laquelle la partie de carter de pompe (38) et la partie de carter de moteur (44) sont réalisées sous forme de pièces en matière plastique, et sont soudées l'une à l'autre.

7. Pompe à liquides (10) selon l'une des revendications précédentes, dans laquelle la partie de carter de stator (40) présente une bride de carter de stator (116), qui est enserrée entre la partie de carter de pompe (38) et la partie de carter de moteur (44), et assure le centrage de la partie de carter de stator (40) sur la partie de carter de moteur (44) relativement à un axe de rotation (A) du rotor (28).

8. Pompe à liquides (10) au moins selon les revendications 3 et 7, dans laquelle le deuxième tronçon d'étanchéité (130) de l'élément d'étanchéité (50) surmonte, en direction radiale en se référant à l'axe de rotation (A) du rotor (28), une zone de centrage entre la partie de carter de stator (40) et la partie de carter de moteur (44).
